# EUROPEAN PATENT APPLICATION

(11) **EP 1 405 895 A1**
(43) Date of publication of application: **07.04.2004**
(21) Application number: 02079164.6
(22) Date of filing: 04.10.2002
(51) Int. Cl.: C10B 7/10, C10B 47/44, B01J 19/20

(54) **Apparatus and process for the treatment of a material under pyrolytical conditions, and use thereof**

(71) Applicant: Danieli Corus Technical Services BV, 1970 CA IJmuiden (NL)
(72) Inventor: Meijer, Hendrikus Koenraad Albertus, 1911 JR Uitgeest (NL); Paap, Maarten, 2131 GS Hoofddorp (NL); Prins, Willem Lodewijk, 2353 CA Leiderdorp (NL)
(74) Representative: Kruit, J., Ir.

(57) **Abstract**

The invention relates to an apparatus for the treatment of a material under pyrolytical conditions, the apparatus comprising a housing for processing the material.

The invention is characterised in that in the housing an extrusion screw is provided.

The invention also relates to a process for the treatment of a material under pyrolytical conditions, and to the use of the apparatus and the process.

## Description

The invention relates to an apparatus for the treatment of a material under pyrolytical conditions, the apparatus comprising a housing for processing the material. The invention also relates to a process for the treatment of a material under pyrolytical conditions in three phases, a heating phase of the material, a reaction phase in which the material may become at least partially plastic and a third phase in which one or more processed products are formed. The invention furthermore relates to the use of the apparatus and/or the process.

A treatment under pyrolytical conditions is a well-known process for making char from coal in three phases, for instance known from US-A-5,296,005 or WO-A-02/31081. In each of the known processes the coal is heated, after which the coal becomes at least partially plastic and loses volatiles (while it is still heated). After a period of time the plastic coal has lost a certain amount of volatiles and the chemical composition changes, such that it becomes brittle and turns into char, while still losing volatiles. Normally this process is effectuated in one or more housings, through which the coal and char are transported using a screw.

This process has the drawback that when the coal becomes plastic, the coal sticks together and forms a compact mass, which is transported through the housing as a massive lump between the blades of the screw. No mixing takes place during this reaction phase. Because no mixing takes place, the heat transfer to the coal is very poor, resulting in an overheating of the coal near the (heated) housing and an underheating of the coal at a distance from the housing. Often the housing gets choked due to the stickiness of the plastic coal. The consequence is that the coal in the reaction phase must be heated slowly, resulting in long process times and large or long apparatus. The same drawback holds for other materials that are processed under pyrolytical conditions and are plastic during at least part of the processing time.

It is an object of the invention to provide a process and an apparatus for the treatment of a material under pyrolytical conditions, resulting in an efficient and fast production of the processed product.

It is another object of the invention to provide a process and apparatus for the treatment of a material under pyrolytical conditions wherein the material is well heated in the reaction phase.

It is still another object of the invention to provide a process and apparatus for the treatment of a material under pyrolytical conditions herein the residence time and the temperature profile of the material are well controllable.

According to a first aspect of the invention there is provided an apparatus for the treatment of a material under pyrolytical conditions, the apparatus comprising a housing for processing the material, wherein in the housing an extrusion screw is provided.

The use of an extrusion screw in the apparatus for the treatment of a material under pyrolytical conditions provides an efficient and forced transport of the material and the processed product in the housing, which especially for at least partially plastic material results in a good heat transfer from the housing to the material. An extrusion screw is known for the mixing and extrusion of foodstuffs, but not known for the treatment of materials under pyrolytical conditions.

For the sake of clarity it has to be understood that for this invention a treatment under pyrolystical conditions should be understood to be the treatment of a material by which the material is heated to a certain temperature, during which treatment no oxygen is present or oxygen is only present in low partial pressures, resulting in a variety of chemical reactions and the forming of one or more processed products and reaction gasses. The materials used and the processed products formed will be elucidated below.

Preferably a double extrusion screw is provided in the housing. A double extrusion screw gives a very efficient mixing of heavy liquids and particle-like material and especially of at least partially plastic material. For this invention a double extrusion screw is defined as two approximately parallel screws having blades such that the thickness of a blade is at least half the distance between two neighbouring blades.

According to a preferred embodiment the double extrusion screw is an intermeshing double extrusion screw, preferably a counter rotating intermeshing double extrusion screw. In an intermeshing double extrusion screw the material and the processed products are retained between the blades of each screw and forced to mix due to the action of the rotating other screw. For this invention an intermeshing double extrusion screw is defined as an extrusion screw of which the distance between the shafts of the screws is at most the addition of the height of the blades on both screws. A counter rotating intermeshing double extrusion screw results in the required mixing of the material and the products.

According to a preferred embodiment the extrusion screw has a hollow shaft. The hollow shaft makes it possible to heat the material and the processed products by way of the screw as well, resulting in a vaster heating of the material and the processed products, by transporting heated gasses or a heated liquids through the hollow shaft.

Preferably the blade or blades on the hollow shaft are hollow as well. This results in a still better heating of the material and the processed products.

It is possible to provide the extrusion screw with a double blade over at least part of its length. This has the advantage that the screw has an additional surface, resulting in a faster heating of the material and a shorter screw.

It is also possible to give the extrusion screw a blade with a variable pitch. This has the advantage of an improved process control for each phase in the process.

Preferably the distance between the shaft of the screw and the housing is at least of the same order as the distance between two successive blades, more preferably the distance between the shaft and the housing being larger than the distance between two successive blades. This results in the best heat transfer to the material and the products.

According to a preferred embodiment of the apparatus the screw has a shaft on which internals such as paddles and/or rods are provided. The internals provide a kneading of the material and the processed products. Kneading the material and the products results in a thorough mixing of the material and products, and thus a very efficient heat transfer.

Preferably the housing is double walled. In this way heated gasses or a heated fluid can be guided efficiently over the inner wall of the housing to heat the material and the products.

According to a preferred embodiment of the apparatus the housing has one or more outlets for the gasses formed and/or one or more outlets for processed products. When the treatment results in different products during different stages of the process, these different products can thus be discharged separately. The same holds for the gasses formed.

Preferably the housing and/or the extrusion screw have been made from cast iron, preferably nodular cast iron. For the reaction temperatures that are needed according to the process of the invention, for most materials the extrusion screw and/or the housing can be cast in nodular cast iron, resulting in a relatively inexpensive apparatus.

According to a preferred embodiment the housing has a length between 1 and 25 metres, preferably between 8 and 15 metres, more preferably approximately 12 metres.

According to a second aspect of the invention there is provided a process for the treatment of a material under pyrolytical conditions in three phases, a heating phase of the material, a reaction phase in which the material may become at least partially plastic and a third phase in which one or more processed products are formed, wherein the processed products are formed from the material in a housing while the material and the products in the housing are transported forcibly.

Due to the forcible transport of the material in the housing the material and the processed products are controlled well, the temperature profile or the material and the processed products is fixed and no overheating will take place.

According to a preferred process the material and the processed products are transported through the housing by means of a screw. A screw is an efficient means to transport both material and products, these often being brittle or particle-like, and at least partially plastic material through a housing slowly and efficiently.

Preferably the material and the processed products are transported through the housing by means of an extrusion screw. By using an extrusion screw the material and the processed products are mixed well in between the blades of the screw.

According to a preferred embodiment the material and the processed products are transported through the housing by means of a double extrusion screw. The use of a double extrusion screw results in a very efficient mixing of at least partially plastic material in the reaction phase because the coal is retained in more or less C-shaped segments between the blades of each screw, where the other screw effects a thorough mixing. The form and construction of the double extrusion screw according to the invention are described above and will be elucidated below.

Preferably the screw is self-cleaning during the transport of the material and the processed products. When the screw is self-cleaning no material or processed products will adhere to the screw, resulting in a more efficient heat transfer from the screw to the material or the products.

According to a preferred process the material and the processed products are kneaded during transport. Kneading the material and the products results in a thorough mixing of the material and products, and thus a very efficient heat transfer.

Preferably the extrusion screw rotates with a velocity of at most 25 rounds per minute, preferably at a velocity of approximately 1 round per minute. This relatively slow rotational velocity results in an efficient mixing of the material and the processed products.

Preferably the material and the processed products are heated to a maximum temperature of 300° C to 1000° C, more preferably to a temperature of 400° C to 700° C, still more preferably to a temperature of approximately 600° C. Of course these temperatures depend on the material to be treated. Due to the efficient mixing and heating of the material in the housing, the temperature of the heating gasses or liquids for heating the housing and the screw need not be much higher than the maximum temperature of the material.

Preferably the transporting time of the material and the processed products in the housing is between 10 and 60 minutes. Due to the excellent mixing the products are formed fast and the process can be executed in a short time period.

If necessary internals can be provided in the apparatus to promote the mixing of the material and/or the processed products. Internals such as paddles, rods or other means can be applied easily in the apparatus to improve the mixing, kneading, transport or heat transfer. Such internals have to take the place of (part of) the blade of the extrusion screw. A temperature gradient over the housing can also be applied as required to promote the treatment of the material, if necessary.

According to a third aspect of the invention use is made of the apparatus according to the first aspect of the invention and/or the process according to the second aspect of the invention, wherein the material coal is processed into the product char. The process and apparatus according to the invention are very well suited for processing coal, because the at least partially plastic coal is well mixed and thus well heated, and well transported through the housing.

The apparatus and the process according to the invention as described above can also be used to realise other processes or chemical conversions under pyrolytical conditions. Chemical reactions at elevated to high temperatures, phase transitions and separations at high temperatures are now also possible using the apparatus and/or the process according to the invention for almost all types of material.

Using the apparatus and process, reduction of metal oxides can be realised. A reducing agent can be used to create high conversion rates under suitable conditions, which can be adapted for each process.

Examples of materials that can be used as metal oxides are iron oxides (such as in iron ores or in concentrates, or in iron oxides containing residues) to produce iron or steel, arsenic oxide concentrates, or lead oxide-containing ores (or lead oxide containing concentrates or wastes), which can be reduced to arsenic or lead. Similarly aluminium, zinc or copper oxides can be converted to aluminium, zinc or copper. In principle all metal oxides can be converted to metals, if necessary or useful in the presence of appropriate reducing agents.

Reducing agents that can be used to get attractive conversions are carbon-containing materials such as coal, char, coke, polymers, residues or carbon containing other materials.

The apparatus and process according to the invention, as described above, can also be used to process tar and/or oils to produce petrols, diesel fuels and/or other chemicals. Tar and heavy oil are products that are for instance residues in the petrochemical industry. At the moment these residues have to be cracked at high temperatures to form useful products. The pyrolysis of tar and heavy oil with the process and apparatus according to the invention results in the fast and relatively cheap forming of the desired products. These products can be petrol, diesel fuel and/or chemicals such as fenolate, naftalenes, methyl naftalenes, anthracenes, creosote oil, soft pitch, hard pitch, impregnation pitch, anode pitch and graphite pitch.

The apparatus and process according to the invention, as described above, can moreover be used for treating wastes such as tyres or plastic residues to produce oil and gas. The process and apparatus according to the invention are very well suited for the mild pyrolysis of wastes, which will result in for instance 70% oil, 15% gases and 15% char-like residue. The process and apparatus also provide a working technology for the treatment of used tyres under pyrolytical conditions, which was hitherto impossible in the known pyrolysis apparatus. Moreover several types of wastes can be converted into usable products like gasses and oil using the process and apparatus according to the invention.

Treatment of polymer material such as plastics under pyrolytical conditions can be used to produce monomers, the building blocks of which the polymers exist. The process and apparatus according to the invention are very well suited to enable this conversion due to their good mixing and transport properties.

Treatment of biomass under pyrolytical conditions can be used to convert the biomass into oil and gas (and minerals in the form of a char like material). The process and apparatus according to the invention are very efficient for this conversion due to their good heat transfer, kneading, mixing and/or transport properties. The energy production with the process and apparatus according to the invention can help to solve the CO₂ problem that causes heating of the earth.

The invention will be elucidated referring to a preferred embodiment, referring to the accompanying drawings.

Figure 1 shows in a very schematic way an apparatus according to the invention, partly in cross section.

Figure 2 shows in more detail the main part of the apparatus of figure 1.

Figure 3 shows a double extrusion screw as used in the apparatus according to figure 1.

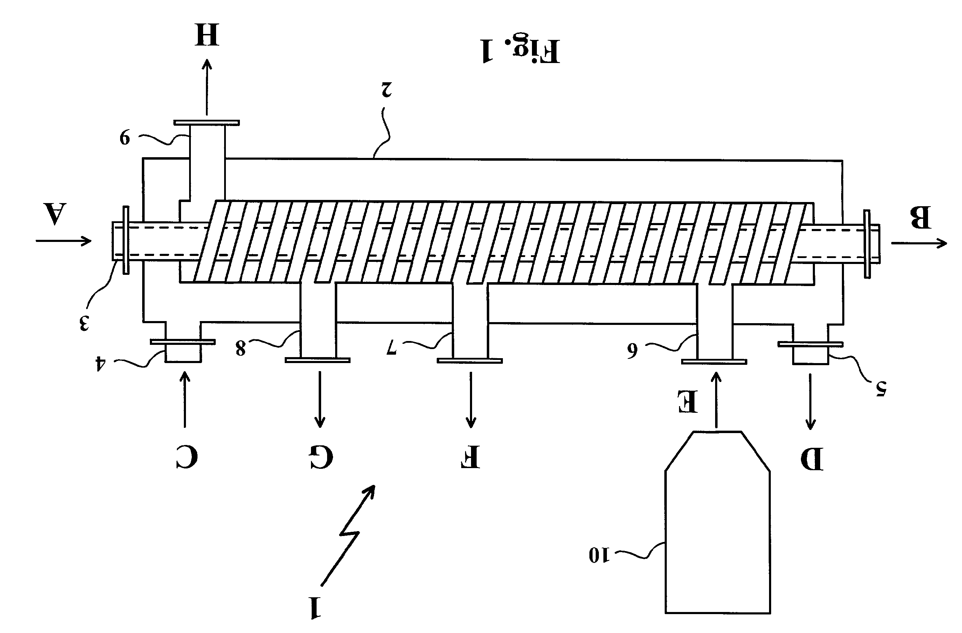

Figure 1 shows a preferred embodiment of an apparatus according to the invention that is typically suitable to convert coal into char-like materials. The apparatus 1 has a double-walled housing 2. In the interior of the housing two extrusion screws 3 are provided, as will be elucidated hereinafter. In the view of figure 1 only one extrusion screw 3 is visible. The screws 3 are hollow to guide hot gasses or liquids through the screws, see inlet arrow A and outlet arrow B.

The housing 2 has several inlets and outlets. Inlet 4 has been provided to let hot gasses in (see arrow C) between the two walls of the housing, and outlet 5 has been provided to let these gasses out (see arrow D). Inlet 6 has been provided to supply material to be treated into the interior of the housing. The material is supplied from a storage bin 10 into the inlet 6, see arrow E. During the treatment of the material gasses are formed, which are exhausted through outlets 7 and 8, see outlet arrows F and G. An outlet 9 has been provided to discharge the processed product. If several products are formed, several outlets can be present.

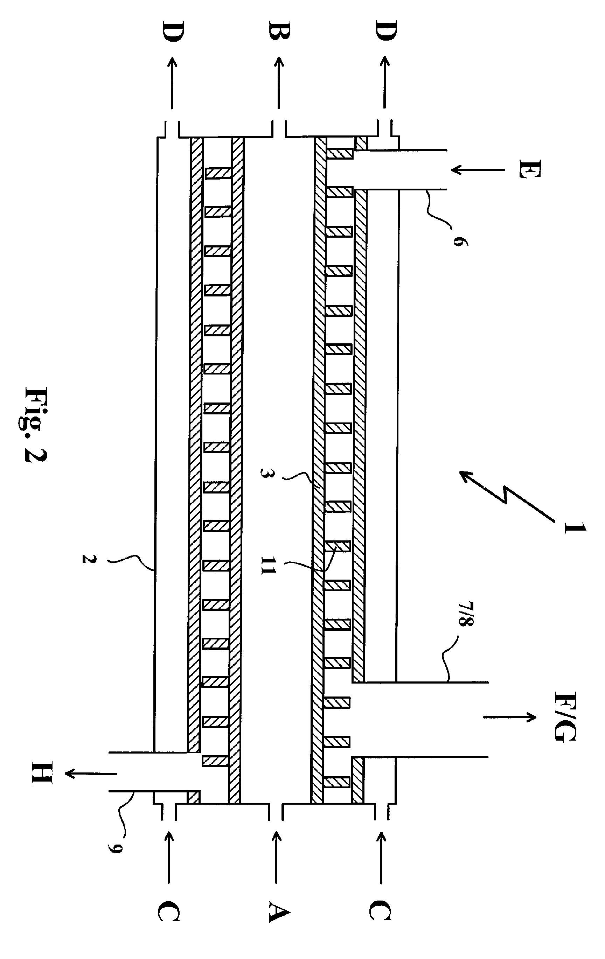

Figure 2 shows the screw 3 and part of the housing 2 in more detail. The hollow screw 3 has been shown in cross section, as a tube having a spiral blade 11 on it. Shown is only one exhaust outlet 7/8. The further signs correspond to the parts in figure 1.

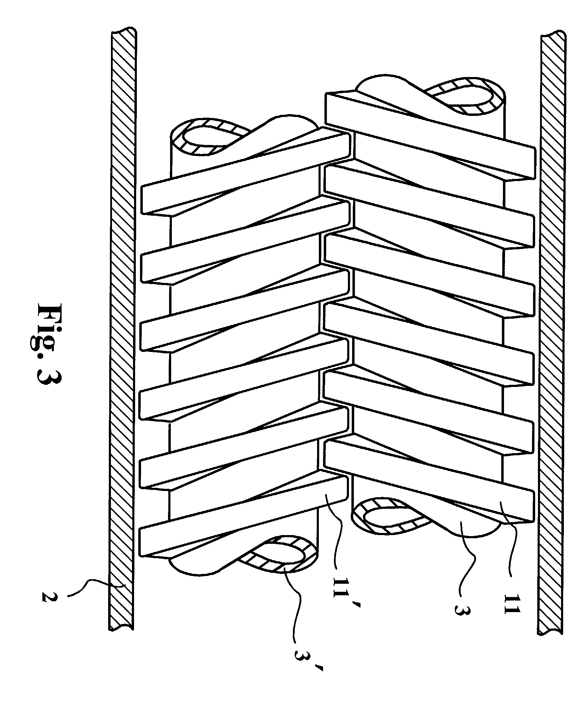

Figure 3 shows a double extrusion screw as used in the apparatus 1 of figures 1 and 2 in more detail. The screws 3 and 3' have a hollow shaft and blades 11, 11' that are preferably hollow as well for the best heat transfer to the material to be treated when hot gasses are guided through the screws. The screws fit closely into each other with very little play, and fit closely in the housing 3 of which only the inner wall is shown. It will be understood that the screws can consist of different sections, each having for example a different pitch. Part of a blade of a screw could be replaced by internals in the form of for example paddles or rods.

The process for the treatment of a material according to the invention will be elucidated hereinafter, referring the figures.

The treatment of a material under pyrolytical conditions is the treatment of a material by which the material is heated to a certain temperature, during which treatment no oxygen is present or oxygen is only present in low partial pressures, resulting in a variety of chemical reactions and conversions, and the forming of processed products and reaction gasses. Chemical reactions at elevated to high temperatures, phase transitions and separations at high temperatures are now also possible using the apparatus and/or the process according to the invention for almost all types of material.

The material is supplied from the storage bin 10 into the housing 2 by way of the inlet 6 and transported through the housing 2 by the extrusion screws 3, to be discharged through the outlet 9. During this transport the material is heated by hot gasses or liquids that are transported through the screws and the housing. The process can be subdivided into three phases: a heating phase, a reaction phase and a phase in which the processed products and gasses are formed. Each phase uses approximately one third of the length of the housing. The heating phase is situated under the inlet 6; the product phase is situated at the end of the housing where the outlet 9 is provided.

Due to the presence of the intermeshing double extrusion screws as shown in figure 3, which are preferably used in counter rotating fashion such that the top halves of the screws rotate towards each other, the material is well mixed in the compartments between the blades of the screws. This is especially of importance during the reaction phase of the process, in which many materials to be treated become at least partially plastic due to the high temperature, which normally has to be somewhere between 300 and 1000° C at its maximum. This partially plastic material is very sticky, difficult to mix and as a result difficult to heat evenly, resulting in too high a temperature near the wall or screw and too low a temperature in the middle of the compartments. The stickiness also easily results in the clogging of the apparatus.

The double extrusion screw according to the invention overcomes the problems encountered with the sticky plastic material in the reaction phase. Due to the small play between the screws, each compartment is virtually closed. This results in a good mixing of the material inside the compartments, and thus a good heat transfer. The closed compartments are forced through the housing by the extrusion screws so no clogging can occur. A controlled transport is effected, also resulting in a controllable temperature regime.

Normally the screws rotated slowly, approximately 1 round per minute, of course dependent on the type of material to be treated and the length of the screws. An apparatus having a length of 12 metres will in most cases suffice.

The material to be treated can be almost any material. A treatment under pyrolytical conditions is a known process for processing coal to produce char or coke. However, the process and apparatus according to the invention can also be used to treat tar or oils, such that petrols, diesel fuels and/or other chemicals are produced. Moreover, the process and apparatus can be used to process tyres to produce oil and gas, but also to process waste material such as household wastes, or more specific wastes such as plastics. Besides these materials the process and apparatus can be used to process biomass to produce fuels in the form of oil and gasses.

During the treatment under pyrolytical conditions gasses are produced. The type of gas produced can differ from phase to phase in the process. For most materials that are treated, these gasses can still be used to generate energy. It can be sensible to separate the gasses produced during one phase from the gasses produced in another phase. For this reason in figure 1 two outlets 7, 8 are shown. The exact positioning of these outlets depends on the material pyrolysed, and more than two outlets could be present. For other materials one outlet could be enough, as shown in figure 2. The same holds for the outlet for the products formed.

It will be understood that the double extrusion screw as shown in figure 3 is only one of the possible configurations that can be used in the apparatus according to the invention. It will for example be possible to use screws with a double blade over at least part of their length, or to use screws having blades with a variable pitch. Moreover, the distance between the shafts of the screws can be varied, as long as the blades are intermeshing, otherwise a poorer mixing will be the result. Also the thickness of the blades can be varied.

## Claims

1. Apparatus for the treatment of a material under pyrolytical conditions, the apparatus comprising a housing for processing the material, **characterised in that** in the housing an extrusion screw is provided.

2. Apparatus according to claim 1, wherein a double extrusion screw is provided in the housing.

3. Apparatus according to claim 2, wherein the double extrusion screw is an intermeshing double extrusion screw, preferably a counter rotating intermeshing double extrusion screw.

4. Apparatus according to any one of claims 1 - 3, wherein the extrusion screw has a hollow shaft.

5. Apparatus according to claim 4, wherein the blade or blades on the hollow shaft are hollow as well.

6. Apparatus according to any one of claims 1 - 5, wherein the extrusion screw has a double blade over at least part of its length.

7. Apparatus according to any one of the claims 1 - 6, wherein the extrusion screw has a blade with a variable pitch.

8. Apparatus according to any one of claims 1 - 7, wherein the distance between the shaft of the screw and the housing is at least of the same order as the distance between two successive blades, preferably the distance between the shaft and the housing being larger than the distance between two successive blades.

9. Apparatus according to any one of claims 1 - 8, wherein the screw has a shaft on which internals such as paddles and/or rods are provided.

10. Apparatus according to any one of claims 1 - 9, wherein the housing is double walled.

11. Apparatus according to any one of the claims 1 - 10, wherein the housing has one or more outlets for the gasses formed and/or one or more outlets for products formed.

12. Apparatus according to any one of claims 1 - 11, wherein the housing and/or the extrusion screw have been made from cast iron, preferably nodular cast iron.

13. Apparatus according to any one of claims 1 - 12, wherein the housing has a length between 1 and 25 metres, preferably between 8 and 15 metres, more preferably approximately 12 metres.

14. Process for the treatment of a material under pyrolytical conditions in three phases, a heating phase of the material, a reaction phase in which the material may become at least partially plastic and a third phase in which one or more processed products are formed, **characterised in that** the processed products are formed from the material in a housing while the material and the products in the housing are transported forcibly.

15. Process according to claim 14, wherein the material and the processed products are transported through the housing by means of a screw.

16. Process according to claim 15, wherein the material and the processed products are transported through the housing by means of an extrusion screw.

17. Process according to claim 16, wherein the material and the processed products are transported through the housing by means of a double extrusion screw.

18. Process according to claim 15, 16 or 17, wherein the screw is self-cleaning during the transport of the material and the processed products.

19. Process according to any one of claims 14 - 18, wherein the material and the processed products are kneaded during transport.

20. Process according to any one of claims 15 - 19, wherein the extrusion screw rotates with a velocity of at most 25 rounds per minute, preferably at a velocity of approximately 1 round per minute.

21. Process according to any one of claims 14 - 20, wherein the material and the processed products are heated to a maximum temperature of 300° C to 1000° C, preferably to a temperature of 400° C to 700° C, more preferably to a temperature of approximately 600° C.

22. Process according to any one of claims 14 - 21, wherein the transporting time of the material and the processed products in the housing is between 10 and 60 minutes.

23. Use of the apparatus according to any one of claims 1 - 13 and/or the process according to any one of claims 14 - 22, **characterised in that** the material coal is processed into the product char.

24. Use of the apparatus according to any one of claims 1 - 13 and/or the process according to any one of claims 14 - 22, **characterised in that** the material iron ore is processed into the product steel in the presence of a reducing agent.

25. Use of the apparatus according to any one of claims 1 - 13 and/or the process according to any one of claims 14 - 22, **characterised in that** the material tar and/or oil is processed into the products petrol, diesel fuel and/or other chemicals.

26. Use of the apparatus according to any one of claims 1 - 13 and/or the process according to any one of claims 14 - 22, **characterised in that** the material biomass, tyres or waste is processed into the products oil and gas.
